# EUROPEAN PATENT APPLICATION

(11) **EP 4 553 178 A1**
(43) Date of publication of application: **14.05.2025**
(21) Application number: 23871520.5
(22) Date of filing: 10.08.2023
(51) Int. Cl.: C21D 9/46, C21D 9/56, C22C 38/00, C22C 38/60, C21D 1/26, C21D 1/42

(54) **CONTINUOUS ANNEALING EQUIPMENT, CONTINUOUS ANNEALING METHOD, COLD-ROLLED STEEL SHEET MANUFACTURING METHOD, AND PLATED STEEL SHEET MANUFACTURING METHOD**

(30) Priority: 27.09.2022 JP 2022154248
(71) Applicant: JFE Steel Corporation, Tokyo 100-0011 (JP)
(72) Inventor: OSUKA, Kenichi, Tokyo 100-0011 (JP); KOMINE, Shinsuke, Tokyo 100-0011 (JP); TAKEDA, Gentaro, Tokyo 100-0011 (JP)
(74) Representative: Scott, Stephen John
(86) International application number: PCT/JP2023/029323
(87) International publication number: WO 2024/070278

(57) **Abstract**

Provided is a continuous annealing line, a continuous annealing method, a method of producing a cold-rolled steel sheet, and a method of producing a coated or plated steel sheet that can respond quickly to variation in material properties and substantially reduce variation in mechanical properties of products. The continuous annealing line is for a steel sheet and includes a heating zone (6), a soaking zone (7), and a cooling zone (8), in this order, at least one induction heating device (9) disposed between the soaking zone (7) and the cooling zone (8), and a measuring device (phase transformation rate meter (10)) disposed at or after an exit from the induction heating device (9) and configured to measure at least one phase fraction of the steel sheet.

## Description

### TECHNICAL FIELD

The present disclosure relates to continuous annealing lines, continuous annealing methods, methods of producing cold-rolled steel sheets, and methods of producing coated or plated steel sheets. The present disclosure relates, in particular, to a continuous annealing line, a continuous annealing method, a method of producing a cold-rolled steel sheet, and a method of producing a coated or plated steel sheet for producing a high strength steel sheet used as automobile structural material and the like.

### BACKGROUND

In the production of thin steel sheets for automobiles, continuously cast slabs are heavily processed by hot rolling and cold rolling until reaching final sheet thickness. In subsequent annealing treatment, cold work microstructure recovery, recrystallization, and grain growth, as well as transformation microstructure control, are carried out to adjust the balance between strength and workability.

In recent years, continuous annealing furnaces are typically used in annealing treatment, in which heating, soaking, and cooling are carried out continuously while conveying steel sheets connected as a continuous strip. Further, depending on steel sheet application, hot-dip galvanizing treatment, overaging treatment, and the like are carried out after the cooling.

Radiant tube burners are typically used as heaters in annealing furnaces, which use gas combustion to heat metal tubes (radiant tubes) and indirectly heat steel sheets with the radiant heat. Further, in the production of hot-dip galvanized steel sheets, direct flame furnaces, in which a gas combustion flame is directly jetted onto steel sheets to secure coatability, are sometimes employed in preheating portions of heating furnaces.

Radiant tube furnaces heat steel sheets by radiant heat from the radiant tubes and furnace wall, and therefore the volume of the heat source is very large and thermal inertia is large. This makes it difficult to quickly keep up with changes in temperature setting. Further, towards the end of heating, the temperature increase rate of steel sheets is slower and a certain amount of time for soaking is required for microstructure control, which increases the required furnace length and further increases thermal inertia, resulting in a greater delay in reaching a target temperature. As a result, in the process of continuously processing coils, a problem may occur in that temperature of a portion of a steel sheet does not fall within a defined annealing temperature range, which can cause problems such as lower yield rate due to variations in mechanical properties and lower productivity due to changes in line speed for temperature control.

In response to the problems described above, Patent Literature (PTL) 1 describes a technology to improve responsiveness by installing an induction heating device between the preheating zone and the heating zone (in a direct flame heating furnace) or between a plurality of heating zones of a direct flame heating furnace to supplement heating capacity. PTL 2 describes a technology for highly efficient continuous annealing by installation of an electrical resistance heating device or an induction heating device at the soaking zone exit. PTL 3 describes a technique of slow heating from 650 °C to 750 °C and rapid heating from there to an annealing maximum arrival temperature of 750 °C to 910 °C. PTL 4 describes that changes in annealing maximum arrival temperature in the longitudinal direction of a steel sheet according to a recrystallization and grain growth model stabilizes the variation of mechanical properties due to variation in steel composition and hot rolling conditions.

### CITATION LIST

### Patent Literature

PTL 1: JP H11-061277 A
PTL 2: JP H09-003552 A
PTL 3: JP 2000-144262 A
PTL 4: JP H10-152728 A

### SUMMARY

### (Technical Problem)

The technology of PTL 1 requires low steel sheet temperature at the exit from the direct-type heating furnace to prevent excessive oxidation of the steel sheet surface, and the radiant tube furnace also needs to be heated. This makes it difficult to shorten furnace length, and the effect of changing the furnace temperature setting is far-reaching. Further, it is stated that the effect of furnace temperature fluctuations can be absorbed by high speed control of the output of the induction heating device, but the direct-type heating furnace following the induction heating device focuses on controlling steel sheet oxidation, making it difficult to flexibly control steel sheet temperature. Therefore, the effect of absorbing the influence of furnace temperature fluctuation cannot be fully demonstrated.

The technology of PTL 2 is directed to paint bake hardening (BH) steel sheets, and it is stated that by installing a heating apparatus at the soaking zone exit, even a small annealing furnace can achieve high annealing temperatures without decreasing conveyance speed. Further, the technology of PTL 2 introduces a function related to steel sheet temperature called an annealing parameter, and it is stated that optimal material property is obtainable by ensuring that the annealing parameter exceeds a threshold value. However, dual phase steels (DP steels), the production of which has been increasing in recent years due to the demand for higher strength products, require transformation from α-phase to γ-phase during annealing. In the case of DP steel, it is necessary to heat the steel in the annealing furnace to a maximum arrival temperature that is at least the A₁ transformation temperature and is less than the A₃ transformation temperature, and to control the fractions of α-phase and γ-phase according to the arrival temperature. Although the control of annealing temperature is an important parameter in the production of DP steel, the fractions of α-phase and γ-phase are the primary index for controlling material properties. Therefore, the technology of PTL 2 does not necessarily stabilize the material properties of the steel sheet.

The technique of PTL 3 is directed to interstitial free steel (IF steel) and control of the annealing maximum arrival temperature by rapid heating using an induction heating device or electrical resistance heating device before soaking, so that material property variation predicted from the results of prior processing is absorbed by grain size changes of α recrystallized grains after annealing. However, in the case of DP steel, when the temperature is raised abruptly to a soaking temperature, that is, maximum arrival temperature, after slow heating, as in the technique of PTL 3, the α-phase transforms abruptly to the γ-phase while crystal grain size remains fine, making it impossible to control phase fractions to a target level.

According to the technology of PTL 4, after heating a steel sheet to the recrystallization range, the sheet is temporarily held in that range to allow recrystallization to fully progress, and then heated again to a target annealing temperature by rapid heating. This technique makes it possible to prevent rapid transformation from α-phase to γ-phase due to rapid heating, and in principle, a phase fraction can be controlled by controlling the maximum arrival temperature. However, in the actual production process, it is difficult to control the phase fraction simply via the steel sheet temperature because transformation behavior varies depending on the chemical composition of the material, meaning that controlling the material property variation in each product is not possible.

In view of the above problems, it would be helpful to provide a continuous annealing line, a continuous annealing method, a method of producing a cold-rolled steel sheet, and a method of producing a coated or plated steel sheet that can respond quickly to variation in material properties and substantially reduce variation in mechanical properties of products.

### (Solution to Problem)

(1) A continuous annealing line according to an embodiment of the present disclosure is
   a continuous annealing line for a steel sheet, comprising a heating zone, a soaking zone, and a cooling zone, in this order, and further comprising:
   at least one induction heating device disposed between the soaking zone and the cooling zone; and
   a measuring device disposed at or after an exit from the induction heating device and configured to measure at least one phase fraction of the steel sheet.
(2) The continuous annealing line according to (1), as an embodiment of the present disclosure, further comprises
   a control device configured to determine an operating condition of the induction heating device based on a measurement result of the measuring device.
(3) The continuous annealing line according to (1) or (2), as an embodiment of the present disclosure, is configured such that
   a heating rate of the induction heating device is 10 °C/s or more and is 200 °C/s or less.
(4) A continuous annealing method according to an embodiment of the present disclosure is
   a continuous annealing method for a steel sheet that is conveyed through a heating zone, a soaking zone, and a cooling zone, in this order, the method comprising:
   after holding the temperature of the steel sheet in a recrystallization temperature range in the soaking zone,
   a step of rapidly heating the steel sheet by at least one induction heating device disposed between the soaking zone and the cooling zone; and
   a step of controlling an operating condition of the induction heating device based on a phase fraction of the steel sheet obtained between an exit from the soaking zone and entry to the cooling zone.
(5) The continuous annealing line according to (4), as an embodiment of the present disclosure, wherein
   the induction heating device heats the steel sheet at a rate of 10 °C/s or more and 200 °C/s or less.
(6) A method of producing a cold-rolled steel sheet according to an embodiment of the present disclosure, the method comprising
   a step of annealing the steel sheet that is a cold-rolled steel sheet at an annealing temperature adjusted by the continuous annealing method according to (4) or (5).
(7) A method of producing a coated or plated steel sheet according to an embodiment of the present disclosure, the method comprising
   a step of applying a coating or plating treatment to a surface of the steel sheet annealed by the method of producing a cold-rolled steel sheet according to (6).
(8) The method of producing a coated or plated steel sheet according to (7), as an embodiment of the present disclosure, wherein
   the coating or plating treatment is electrogalvanization treatment, hot-dip galvanizing treatment, or galvannealing treatment.

### (Advantageous Effect)

The present disclosure provides a continuous annealing line, a continuous annealing method, a method of producing a cold-rolled steel sheet, and a method of producing a coated or plated steel sheet that can respond quickly to variation in material properties and substantially reduce variation in mechanical properties of products. This makes it possible to produce a thin steel sheet and the like having a targeted mechanical property more consistently than with a conventional annealing furnace.

### BRIEF DESCRIPTION OF THE DRAWINGS

In the accompanying drawings:
FIG. 1 is a schematic diagram illustrating a hot-dip galvanizing process provided with a continuous annealing line according to an embodiment;
FIG. 2 is a diagram illustrating an example of steel sheet temperature history; and
FIG. 3 is a flowchart illustrating an example of a continuous annealing method.

### DETAILED DESCRIPTION

Hereinafter, with reference to the drawings, a continuous annealing line, a continuous annealing method, a method of producing a cold-rolled steel sheet, and a method of producing a coated or plated steel sheet are described according to embodiments of the present disclosure.

### <Line configuration>

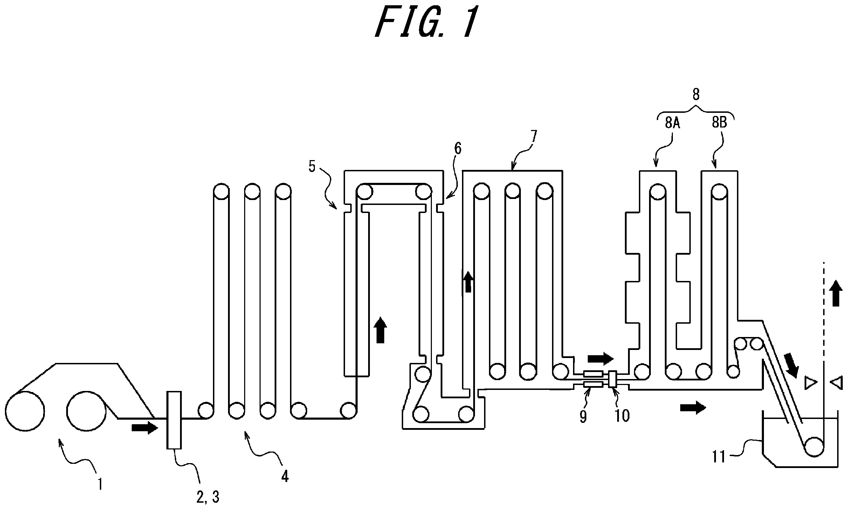

FIG. 1 illustrates a portion of a hot-dip galvanizing process provided with the continuous annealing line according to the present embodiment. According to the present embodiment, a steel material produced using the hot-dip galvanizing process is a thin steel sheet. Further, the steel material produced is a cold-rolled steel sheet. The arrows in FIG. 1 indicate the direction of line travel. Hereinafter, the upstream side in this direction of travel may be described as "before/previous" and the downstream side as "after/subsequent". The continuous annealing line includes a payoff reel 1, a welder 2, an electrolytic cleaning device 3, an entry-side looper 4, a preheating zone 5, a heating zone 6, a soaking zone 7, and a cooling zone 8. Further, the continuous annealing line includes an induction heating device 9 (hereinafter, also referred to as "IH") and a phase transformation rate meter 10. The continuous annealing line includes at least one induction heating device 9. Further, the continuous annealing line includes at least one phase transformation rate meter 10. According to the present embodiment, the cooling zone 8 includes a first cooling zone 8A and a second cooling zone 8B. The continuous annealing line may further include a galvanizing tank (zinc pot 11) into which a thin steel sheet cooled to a defined temperature is dipped, an alloying zone, a holding zone, a final cooling zone, a temper rolling mill, a delivery-side looper, a tension reel, and the like.

A thin steel sheet coiled in a previous process is uncoiled by the payoff reel 1. After passing through the preheating zone 5, the uncoiled thin steel sheet enters a continuous annealing furnace. The continuous annealing line includes the preheating zone 5 followed by the heating zone 6, the soaking zone 7, and the cooling zone 8, in this order. In the continuous annealing line, the induction heating device 9 is disposed between the soaking zone 7 and the cooling zone 8. Further, the continuous annealing line includes the phase transformation rate meter 10 at or after an exit from the induction heating device 9. In the example in FIG. 1, the phase transformation rate meter 10 is disposed between the induction heating device 9 and the cooling zone 8, but the position is not limited as long as it is at or after the exit from the induction heating device 9. Here, the phase transformation rate meter 10 is an example of a measuring device that measures a phase fraction of a steel sheet.

Further, the continuous annealing line includes a control device that adjusts the output of the induction heating device 9 using a phase fraction measurement result of the phase transformation rate meter 10. Here, the continuous annealing line according to the present embodiment is not limited to the configuration illustrated in FIG. 1, and may be varied according to a target quality of a steel sheet to be produced. For example, the continuous annealing furnace may be followed by the zinc pot 11 and an alloying zone or the like, the zinc pot 11 may be omitted, etc. Further, portions of the continuous annealing line may be subdivided. For example, the soaking zone 7 may be divided so that each portion of the divided soaking zone 7 controls the atmosphere or temperature independently.

### <Component details>

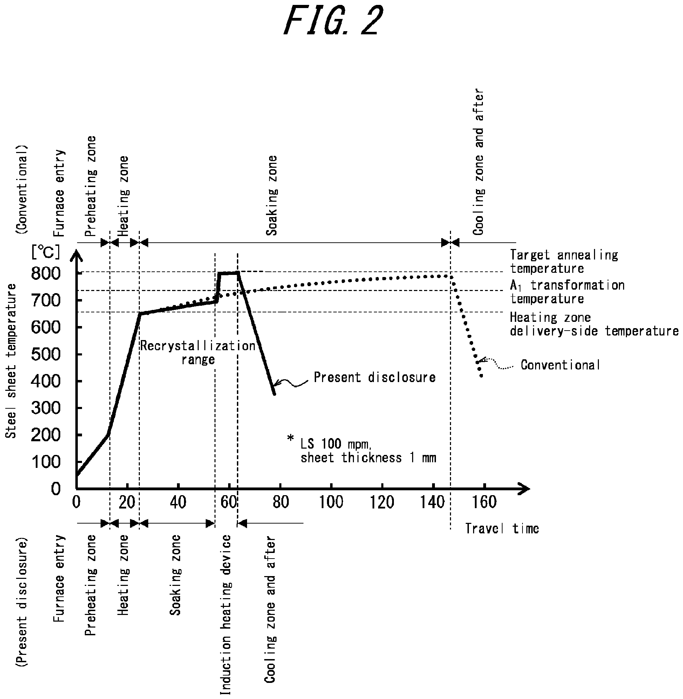

FIG. 2 illustrates the temperature history of a steel sheet when annealed in a typical conventional technology annealing furnace and when annealed in the annealing furnace according to the present embodiment. The vertical axis is steel sheet temperature. The horizontal axis is travel time. The line speed is 100 mpm. The thickness of the steel sheet is 1 mm. The temperature history according to the present embodiment is indicated by a solid line, and corresponding processes (apparatus) are indicated below the chart. The temperature history according to conventional technology is indicated by a dotted line, and corresponding processes (apparatus) are indicated above the chart. As illustrated in FIG. 2, the annealing furnace according to the present embodiment requires less time for annealing than the conventional technology due to the configuration described below.

### (Preheating zone)

A thin steel sheet paid out from the payoff reel 1 at room temperature to about 100 °C first enters the preheating zone 5, to be heated to about 200 °C. The temperature of the thin steel sheet may be simply increased by heating. According to the present embodiment, the preheating zone 5 uses high-temperature exhaust air produced in the heating zone 6.

### (Heating zone)

The steel sheet then enters the heating zone 6, where steel sheet temperature is heated to about 600 °C to 700 °C. The temperature of the thin steel sheet may be simply increased by heating. According to the present embodiment, the heating zone 6 uses a direct flame heating furnace system to raise the temperature to a certain level in a short time and to control surface conditions. In addition to high heating capacity and small furnace volume, the direct flame heating furnace allows flexible control of the redox reaction at the steel sheet surface in consideration of a subsequent coating or plating process.

### (Soaking zone)

The main role of the soaking zone 7 is to progress the recrystallization of α-phase. However, at this time, it is acceptable if some portions pass through the A₁ transformation temperature. It is desirable to use a radiant heating (radiant tube heating) system by gas combustion as the heating system of the soaking zone 7, due to high efficiency and heating uniformity. The soaking zone 7 may be configured as a large single furnace shell. Further, the soaking zone 7 may be configured to have two or more compartments, with each compartment separated by a thermal barrier or the like, to hold and heat in a target temperature range determined for each compartment. According to the present embodiment, the soaking zone 7 holds or carries out slow heating so that the temperature of the steel sheet is in a temperature range lower than the A₁ transformation temperature (about 600 °C to 730 °C) to secure residence time in the recrystallization temperature range and to suppress residual unrecrystallized α-phase. Here, the A₁ transformation temperature is the temperature at which austenite transformation occurs, and as an example, the set furnace temperature is 730 °C. In other words, austenite phase begins to develop at temperatures equal to or greater than the A₁ transformation temperature.

The recrystallization temperature range is the temperature range at which metallographic recrystallization proceeds. Hereinafter, this refers to the temperature range from 600 °C to the A₁ transformation temperature. In particular, the specific temperature of the A₁ transformation temperature may be determined from an empirical equation using generally known alloy component content rates, or may be determined by prior experiments using materials of average alloy content for each product, or may be determined by creating a regression equation based on alloy component content rates from those experimental results. Regression equations based on alloy content may use commonly known experimental equations.

Here, when the temperature of the steel sheet in the soaking zone 7 is too low, α-phase recrystallization does not progress and sufficient workability is not obtainable. On the other hand, when the temperature of the steel sheet in the soaking zone 7 is at least the A₁ transformation temperature, α-phase recrystallization grains become coarse and strength becomes insufficient. The A₁ transformation temperature may vary slightly depending on the composition of the steel sheet. Therefore, the recrystallization temperature range is preferably predicted in advance by measurement, calculation, or simulation, and set taking into consideration the error range during annealing.

When the residence time of the steel sheet in the soaking zone 7 is too short, α-phase recrystallization will not progress sufficiently, and when too long, crystal grains become coarse and mechanical properties degrade. Therefore, optimal residence time was studied in advance through experiments, and it was found that 15 s to 80 s is required. When less than 15 s, α-phase recrystallization progress is insufficient, resulting in poor workability, and when more than 80 s, portions having coarse crystal grains develop, resulting in non-uniform strength. Therefore, in the soaking zone 7, the temperature of the steel sheet is held in the temperature range lower than the A₁ transformation temperature for 15 s to 80 s.

In the case of slow heating in the soaking zone 7, it suffices that the residence time in the recrystallization temperature range is the time described above. However, when slow heating in the soaking zone 7, the heating rate is preferably 5 °C/s or less. When rapidly heating at a rate that exceeds 5 °C/s, it becomes impossible to suppress residual unrecrystallized α-phase.

After the residence time in the recrystallization temperature range in the soaking zone 7 is secured, further gradual heating may be carried out even at temperatures equal to or greater than the A₁ transformation temperature, as long as the temperature range is less than 750 °C. However, the heating rate is preferably 5 °C/s or less.

Although the continuous annealing line according to the present embodiment includes the soaking zone 7 using a radiant tube furnace, a configuration without such a soaking zone 7 is possible as long as the configuration has the function of securing enough hold time to allow α-phase recrystallization to proceed. For example, the soaking zone 7 is not limited to including a radiant tube furnace. Further, the continuous annealing line may be configured without the soaking zone 7 and the heating zone 6 may have the ability to secure enough hold time to allow α-phase recrystallization to proceed. Further, the continuous annealing line may include a holding device in place of the soaking zone 7. When the continuous annealing line does not include the soaking zone 7, the induction heating device 9 may be disposed between the portion that has the function of the soaking zone 7 (in the above example, the portion that secures hold time in the heating zone 6 or the holding device) and the cooling zone 8.

### (Induction heating device)

Next, the induction heating device 9 rapidly heats the steel sheet by adjusting output so that the temperature of the steel sheet is in a temperature range from the A₁ transformation temperature to less than the A₃ transformation temperature (about 750 °C to 900 °C). Here, the A₃ transformation temperature is an upper limit temperature at which the γ-phase fraction can be suppressed. The objective of this process is to uniformly raise the temperature of the entire steel sheet to the A₁ transformation temperature or greater in a short time, and also to contribute to downsizing the entire line. Here, the A₁ transformation temperature and the A₃ transformation temperature may vary slightly depending on the composition of the steel sheet. Therefore, an appropriate temperature range is preferably predicted in advance by measurement, calculation, or simulation, and set taking into consideration the error range during annealing.

In DP steel, which is one of the targets of the continuous annealing line according to the present embodiment, arrival temperature in the induction heating device 9 has a large effect on mechanical properties of the final product. Therefore, the heating system of the induction heating device 9 needs to have a fast response to temperature control commands. Further, when heating in such a temperature range, the temperature exceeds the Curie point at which magnetic properties of the steel sheet change, and therefore the induction heating device 9 is preferably a transverse flux type.

Further, in the soaking zone 7, the α-phase recrystallization temperature range is held, and therefore time taken during heating may result in coarsening of α-grains and the induction heating device 9 is preferably capable of rapid heating. The induction heating device 9 may heat at a rate of 10 °C/s to 200 °C/s. When less than 10 °C/s, coarsening of α-grains occurs, and when greater than 200 °C/s, localized high-temperature areas occur in the transverse direction and uniformity is not maintained. The induction heating device 9 more preferably heats at a rate of 20 °C/s or more. The induction heating device 9 more preferably heats at a rate of 100 °C/s or less. When the heating rate is 20 °C/s or more, the line length can be shorter, and when the heating rate is 100 °C/s or less, the risk of buckling deformation of the steel sheet due to thermal stress can be further decreased.

When the induction heating device 9 is used to rapidly heat to the target annealing temperature, it can happen that transformation from α-phase to γ-phase has not yet reached equilibrium immediately after heating. However, when held too long in the vicinity of the target annealing temperature, the transformation from α-phase to γ-phase progresses more than necessary and material property control becomes difficult. Therefore, after reaching the target annealing temperature, it is most desirable to enter the cooling zone 8 as quickly as possible with a hold time of 0 s, and cooling preferably starts in 5 s or less. To avoid non-equilibrium, cooling is started in 10 s or less at the latest, even when held. That is, cooling of the steel sheet starts in the cooling zone 8 in 10 s or less after the heating by the induction heating device 9 is completed.

To meet these conditions, the induction heating device 9 is preferably disposed at a connecting portion connecting the soaking zone 7 and the cooling zone 8. The induction heating device 9 being disposed at the connecting portion is also possible when the induction heating device 9 is added to an existing furnace.

### (Phase transformation rate meter)

The phase transformation rate meter 10 that measures a phase fraction of the steel sheet is disposed at the delivery side of (at or after the exit from) the induction heating device 9, and phase fractions (transformation rate) of the α-phase and γ-phase of the steel sheet after reaching the target annealing temperature are measured. According to the present disclosure, it is particularly effective to use the phase transformation rate meter 10 to determine the γ-phase fraction. Further, based on the γ-phase fraction measured by the phase transformation rate meter 10, preset operating conditions of the induction heating device 9 and the cooling zone 8 are further fine-tuned as required. Such adjustments may be used to stably obtain mechanical properties of a steel sheet. The position of the phase transformation rate meter 10 is not particularly limited as long as the phase transformation rate meter 10 is at or after the exit from the induction heating device 9. However, from the viewpoint of using a measured value as feedback for controlling the induction heating device 9 and the cooling zone 8, closer to the induction heating device 9 is desirable. Specifically, preferably between the exit from the induction heating device 9 and entry to the cooling zone 8.

Here, a method of measuring the transformation rate is not particularly limited, but the austenite fraction may be measured using a magnetic detector, that is, a magnetic transformation rate measuring device, a device for measuring the magnetic transformation rate of a steel strip, including a drive coil that generates a magnetic field and a detection coil that measures the magnetic field that passes through the steel strip. Specifically, a device described in JP 2019-007907 A may be used. However, in the case of a magnetic transformation rate measuring device, when the phase transformation rate meter 10 is disposed near the induction heating device 9, measurement precision may be affected by the magnetic field. Therefore, the magnetic transformation rate measuring device may be disposed inside the soaking zone 7, at the exit from the cooling zone 8, or the like, rather than immediately after the induction heating device 9. As a technique that is not affected by magnetic fields, a device that applies X-ray diffraction may be used. Due to the difference in crystal structure, γ-phase and α-phase generate diffraction peaks at different specific angles when the steel sheet is irradiated with X-rays. The γ-phase fraction can be quantified by this diffraction peak intensity. Commercially available products include, for example, X-CAP produced by SMS Co., Ltd.

### (Cooling zone)

The cooling zone 8 is apparatus that cools a steel sheet to a defined temperature, and may use gas jet cooling, roll-chilling, water cooling (water quenching), or the like as cooling. As in the present embodiment, the cooling zone 8 may be divided into a plurality of zones, such as the first cooling zone 8A and the second cooling zone 8B, and the thermal hysteresis of a steel sheet during cooling may be controlled by combining different cooling or by changing cooling conditions of the same type of cooling.

### (Hot-dip galvanizing bath)

A hot-dip galvanizing bath may follow the cooling zone 8 to apply hot-dip galvanized coating to a steel sheet delivered from the cooling zone 8. Hot-dip galvanizing may be carried out according to a conventional method, and a snout, in-bath roller, and the like may be included as required.

### (Alloying line)

An alloying treatment line may be included following the hot-dip galvanizing bath. In the alloying treatment line, a steel sheet is heated and alloying treatment is applied. The alloying treatment may be carried out according to a conventional method.

### (Other apparatus)

Following the alloying line, a holding zone, a final cooling zone, a temper rolling mill, a straightener, a delivery-side looper, a tension reel, and the like may be further included to improve final product quality and to improve production stability and efficiency. Such apparatus may be included and used according to the quality required for the product and is not limited in any particular way.

### <Operating method (control method)>

According to the present embodiment, an optimal range of phase fractions for each product is known in advance, and the operating conditions of the annealing furnace are controlled so that the results of phase fractions measured by the phase transformation rate meter 10 fall within a target range. In addition to the furnace temperature of the soaking zone 7 and the output of the induction heating device 9, operating conditions of the cooling zone 8 or alloying zone downstream of the induction heating device 9 may be used as control targets. However, the output of the induction heating device 9 is the most effective control target for material property stabilization in terms of responsiveness. Further, the control method may be manual control by a device operator. Specifically, a monitor may be included in an operations room that continuously displays a measurement result of the phase transformation rate meter 10 and a target range of a corresponding coil, and an operating condition of a control target mentioned above may be manually changed so that the measurement result falls within the target range. However, there is a possibility of delay in changing conditions or mishandling in manual control, and therefore it is desirable to construct a control system in which the optimal range of phase fraction for each product is known in advance to construct a transformation rate control model, and for the control system to carry out automatic feedback control of the induction heating device 9 so that a phase fraction measurement result according to the phase transformation rate meter 10 falls within the target range. This allows a preset annealing temperature of a steel sheet to be appropriately adjusted to produce a product having very stable mechanical properties. A transformation rate control model is constructed for each product, and the strength grade is used as a factor to classify the product according to the present embodiment. Factors that classify a product are not limited to the strength grade. For example, a transformation rate control model may be constructed for each product by classifying products according to required product properties, such as steel grade, mechanical properties other than strength, and surface properties.

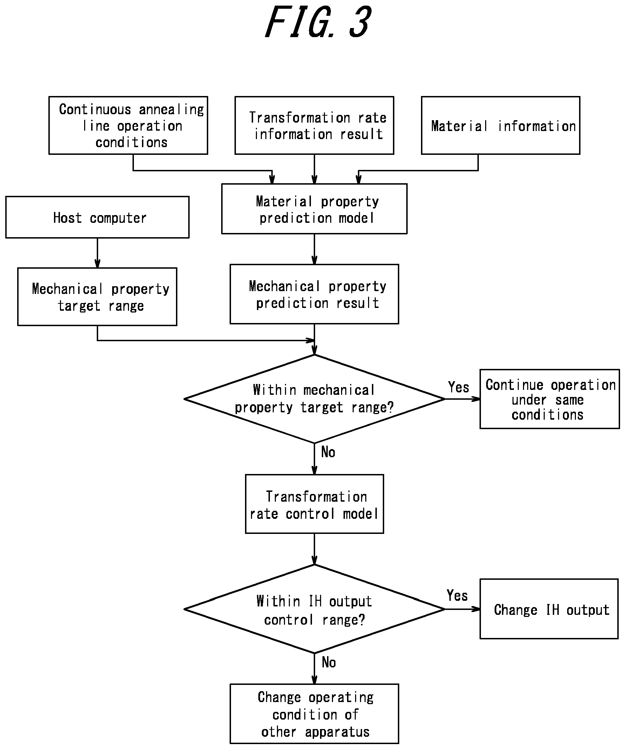

FIG. 3 is a flowchart illustrating an example of a continuous annealing method carried out by the continuous annealing line according to the present embodiment.

Mechanical properties of the final product are predicted using a material property prediction model based on a phase fraction measurement result using the phase transformation rate meter 10 in the annealing furnace ("Transformation rate information result" in FIG. 3), chemical composition information obtained when the material was cast ("Material information" in FIG. 3), and current operating conditions of the continuous annealing line (in particular, operating condition of the cooling zone 8). The material property prediction model used may be a physical model obtained from off-line laboratory experiments or numerical analysis, and may be a machine learning model obtained from accumulated production data.

Next, whether a predicted mechanical property ("Mechanical property predicted result" in FIG. 3) falls within a mechanical property target range acceptable for the product is determined. The mechanical property target range is provided by a host computer. The host computer is a computer that provides production information and the like to a process computer that controls the operation of the continuous annealing line. When within the target range ("Within mechanical property target range" is Yes in FIG. 3), the continuous annealing line continues operation under the current conditions. When outside the target range ("Within mechanical property target range" is No in FIG. 3), the continuous annealing line changes an operating condition. In changing the operating condition, a transformation rate control model is used to determine an amount of phase fraction adjustment required to keep a material property within a target range from the material property prediction model, and to determine the amount of steel sheet temperature control to achieve the amount of phase fraction adjustment. The transformation rate control model may be a physical model obtained from off-line laboratory experiments or numerical analysis, and may be a machine learning model obtained from accumulated production data.

When determining that a required temperature control range is within a range controllable by the induction heating device 9 ("Within IH output control range" is Yes in FIG. 3), the continuous annealing line changes the output of the induction heating device 9. When determining that the required temperature control range is not within the range controllable by the induction heating device 9 ("Within IH output control range" is No in FIG. 3), the continuous annealing line also changes the operating condition of apparatus other than the induction heating device 9 ("Change operating condition of other apparatus" in FIG. 3). The control target may be apparatus disposed upstream of the phase transformation rate meter 10, for example, the cooling zone 8 or the soaking zone 7. The controlled condition may be the jet pressure of cooling gas when gas jet cooling is used in the cooling zone 8, and may be the furnace temperature in the case of the soaking zone 7. Although such apparatus has lower responsiveness to changes in operating conditions than the induction heating device 9, via the above control flow, the amount by which the mechanical property of the product deviates from the target can be minimized by controlling the apparatus in combination with the induction heating device 9.

Here, even in a conventional continuous annealing line, it is possible to try to control the transformation rate by including the phase transformation rate meter 10 and controlling sheet temperature with high precision. However, according to specifications of conventional radiant heating annealing furnaces, heating takes a long time (for example, about 100 s to 200 s), and therefore the responsiveness of furnace temperature to control commands is very poor. Further, the length of a steel sheet affected by furnace temperature changes is also longer, and therefore steel sheet temperature cannot be finely controlled. In contrast, the continuous annealing line according to the present embodiment can control steel sheet temperature at high speed (for example, 10 s or less, or about 5 s). Further, furnace length can be shortened (for example, 70 m to 110 m) without the need to complete transformation to the γ-phase in the soaking zone 7, and therefore responsiveness is increased with respect to commands to change furnace temperature due to changes in steel sheet size or steel grade. As a result, it is possible not only to respond to variation in transformation behavior caused by the material, but also to quickly reflect changes in heating conditions when annealing conditions change at product joints. The range of deviations from the targeted annealing conditions can be decreased, resulting in a much improved yield rate.

Coating or plating treatment, alloying treatment, temper rolling, and shape straightening treatment may be carried out on a steel sheet following annealing treatment in the continuous annealing line. Coating or plating treatment and alloying treatment may be carried out according to a conventional method to meet quality requirements for the surface properties of the product and are not particularly limited.

Further, when a shape defect occurs, the shape defect may be corrected by continuing to pass through temper rolling and straightener apparatus. The temper rolling and straightener apparatus are not limited, as long as only shape correction is carried out under conditions that do not affect mechanical properties of a steel sheet.

### (Target material)

The continuous annealing line according to the present embodiment anneals steel material, including DP steel, to stably obtain a target mechanical property. As a specific example, a target steel sheet may contain, in mass%: C from 0.03 % to 0.25 %, Si from 0.01 % to 2.50 %, Mn from 0.50 % to 4.00 %, P up to 0.100 %, S up to 0.0500 %, Sol.Al from 0.005 % to 2.000 %, N up to 0.100 %, and, as required, Cr, Cu, Ni, Sb, Sn (each up to 1.00 %), Mo, V, Ti, Nb (each up to 0.50 %), Ta (up to 0.10 %), Mg, Zr (each up to 0.050 %), B, Ca, REM (each up to 0.0050 %), with the balance being Fe and inevitable impurity. However, as long as there is a need to control a two-phase microstructure of α-phase and γ-phase, target steel sheets are not limited.

### EXAMPLES

Table 1 lists conditions and results of thin steel sheet production using a conventional continuous annealing line and the continuous annealing line according to the present embodiment (see FIG. 1). Here, for each example except Comparative Example 4, 30 coils of a plurality of strength levels were produced to examine variation in mechanical properties of products. Three strength levels of 780 MPa, 980 MPa, and 1180 MPa grades were produced, and at each strength level, ten coils were produced having three different thicknesses, 1.0 mm, 1.5 mm, and 2.0 mm. Ten slabs of each grade and thickness were each cast in different lots in a continuous casting machine. As a result, although within a production control range, the chemical composition of each slab varied and transformation behavior was not uniform. In Table 1, line configuration lists the devices and the like that make up the line. Further, in Table 1, FB indicates feedback and FF indicates feedforward.

### [Table 1]

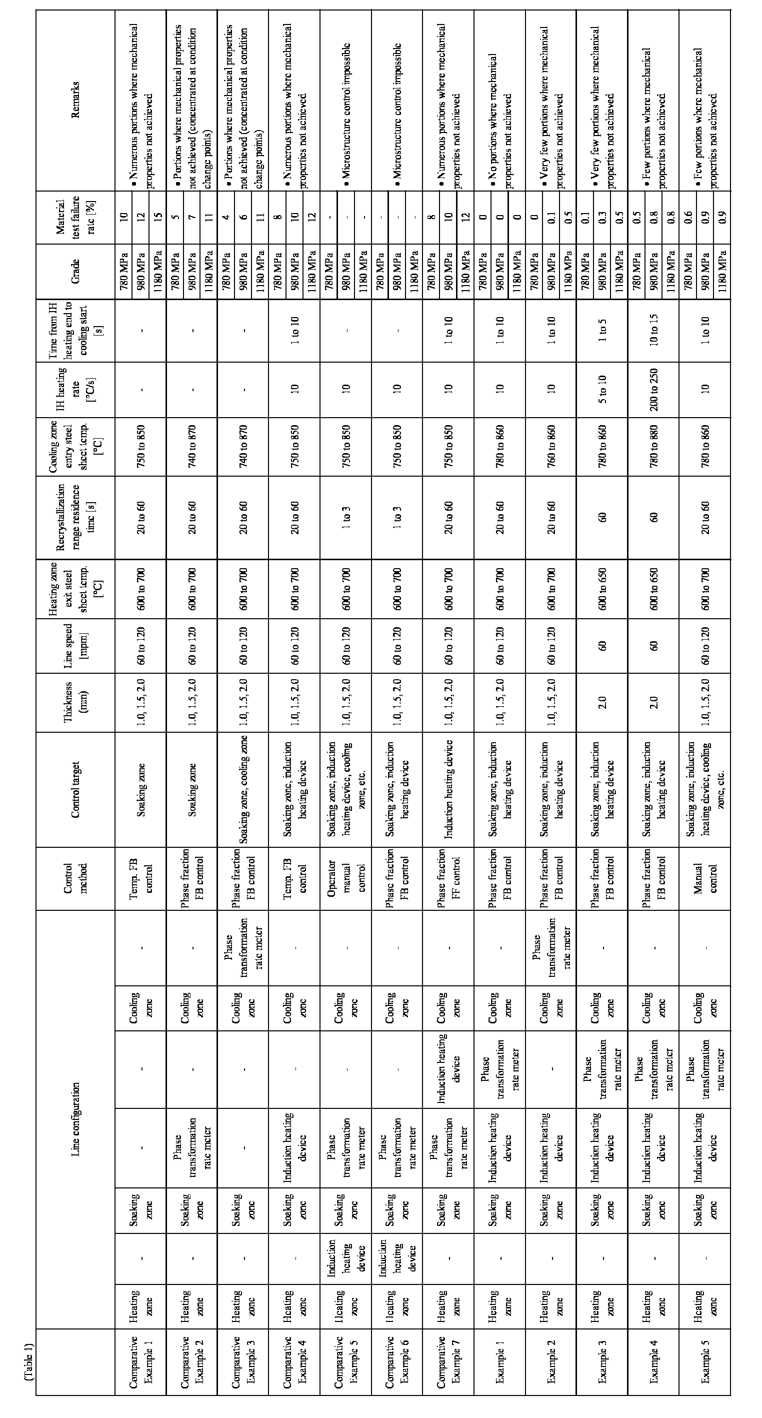

Each slab was subjected to hot rolling and pickling using typical methods, annealing and cold rolling where required, and then annealed, heat-treated, in a laboratory, by a conventional continuous annealing line or the continuous annealing line according to the present disclosure, followed by cooling, coating or plating, and other post-treatment. A tensile test piece was collected every 100 m in the direction of steel sheet transport from the final product coil to measure mechanical properties. Here, the tensile test piece was a JIS No. 5 tensile test piece. Tensile testing was carried out according to JIS Z2241. When a tensile test result was outside a lower limit of a target value for the total length of the coil, a length of 10 m before and after the test piece sampling point was considered to be a material test outlier length. The ratio of the material test outlier length to the total coil length was determined as the "material test failure rate". Further, in the 780 MPa, 980 MPa, and 1180 MPa grades, the required strength ranges were 780 MPa or more, 980 MPa or more, and 1180 MPa or more, respectively.

Comparative Example 1 was produced from the material described above using a conventional annealing furnace including the preheating zone 5, the heating zone 6, and the soaking zone 7, without the induction heating device 9 or the phase transformation rate meter 10. Line speed in production was in a range from 60 mpm to 120 mpm, and heat patterns during steel sheet annealing were controlled according to sheet thickness and composition. Steel sheet temperature at the exit from the heating zone 6 (direct flame heating) was kept in the range from 600 °C to 700 °C to control the surface redox reaction. The steel sheet was then entered into the radiant tube-type soaking zone 7 for further heating, and the residence time in the recrystallization range (about 600 °C to 730 °C) was 15 s to 80 s. The heating/soaking time after the recrystallization range was 100 s to 200 s. The steel sheet temperature at the exit from the soaking zone 7 (entry to the cooling zone 8) was in a range from 750 °C to 850 °C. The furnace temperature of the soaking zone 7 was controlled so that the steel sheet temperature at the exit was at a target value. Some material test pieces were then taken from the final product after cooling, hot-dip galvanizing, alloying treatment, and the like, to investigate variations in mechanical properties. As a result, tensile strength varied greatly within each grade, with some falling below the lower limit for each grade, and there were many occurrences of a material property not being achieved. This is presumably due to the phase fraction during annealing not reaching the targeted value due to variation in the chemical composition of the material, and when annealing conditions changed at the joints between coils of different thicknesses and grades, there were portions where the heating conditions could not keep up.

For Comparative Example 2, the same conventional annealing furnace as in Comparative Example 1 was used and a phase transformation rate meter was disposed at the exit from the soaking zone 7 to produce the final product coil. The basic production conditions were set as in Comparative Example 1, but the transformation rate was measured by the phase transformation rate meter 10 at the exit from the soaking zone 7 to control the furnace temperature of the soaking zone 7. The furnace temperature of the soaking zone 7 was changed to reflect the obtained transformation rate, and therefore the range of temperature variation at the entry to the cooling zone 8 was larger than in Comparative Example 1, but the material test failure rate was improved from Comparative Example 1 due to active control of the furnace temperature in the soaking zone 7. However, presumably there were portions where the annealing furnace control could not keep up, such as at the joints of coils having different sheet thicknesses where annealing conditions differed, and it was not possible to suppress material test outliers.

For Comparative Example 3, the same conventional annealing furnace as in Comparative Example 1 was used and a phase transformation rate meter was installed at the exit from the cooling zone 8 to produce the final product coil. The basic production conditions were set as in Comparative Example 1, but the transformation rate was measured by the phase transformation rate meter 10 at the exit from the cooling zone 8 to control the furnace temperature of the soaking zone 7 and the coolant jet pressure in the cooling zone 8. The furnace temperature of the soaking zone 7 was changed to reflect the obtained transformation rate, and therefore the range of temperature variation at the entry to the cooling zone 8 was larger than in Comparative Example 1, but the material test failure rate was improved from Comparative Example 1 due to active control of the furnace temperature in the soaking zone 7. Further, the coolant jet pressure in the cooling zone 8 was controlled, and therefore the material test failure rate was improved compared to Comparative Example 2. However, presumably there were portions where the annealing furnace control could not keep up, such as at the joints of coils having different sheet thicknesses where annealing conditions differed, and it was not possible to suppress material test outliers.

For Comparative Example 4, an induction heating device was disposed at the exit from the soaking zone 7 of a conventional annealing furnace. The sheet passing speed and the steel sheet temperature at the exit from the heating zone 6 were controlled within the same ranges as in Comparative Example 1. Although the induction heating device 9 was installed, the measured values from the phase transformation rate meter 10 were not fed back to the output control of the induction heating device 9 and the furnace temperature control. Only the steel sheet temperature determined by measurement in the furnace or by calculation was used for control, as conventionally. As a result, controllability of steel sheet temperature was improved and the variation of mechanical properties of the product was improved, but variation due to the chemical composition of the material could not be fully absorbed, and the material test failure rate was not significantly improved from Comparative Example 1.

For Comparative Example 5, an induction heating device was disposed at the entry to the soaking zone 7 of a conventional annealing furnace. Further, the phase transformation rate meter 10 was disposed at the exit from the soaking zone 7. The sheet passing speed and the steel sheet temperature at the exit from the heating zone 6 were controlled within the same ranges as in Comparative Example 1. Based on the measurement results from the phase transformation rate meter 10, an operator manually controlled the operating conditions of each apparatus of the annealing furnace. Although the induction heating device 9 was installed, residence time in the recrystallization range became very short, and transformation progressed rapidly from α-phase to γ-phase without sufficient progress of recrystallization. Therefore, even though the transformation rate was measured at the exit from the soaking zone 7, phase did not change and remained single γ-phase, and the targeted microstructure control could not be achieved at all.

Comparative Example 6, in contrast to Comparative Example 5, is an example of applying an automatic feedback control system that controls the operating conditions of the soaking zone 7 and the induction heating device 9 based on measurement results of the phase transformation rate meter 10. Although the control method was changed, as in Comparative Example 5, the transformation from α-phase to γ-phase could not be controlled, and the desired microstructure could not be obtained.

For Comparative Example 7, the phase transformation rate meter 10 was disposed at the exit from the soaking zone 7 of a conventional annealing furnace, and the induction heating device 9 was disposed downstream of the meter. A feed-forward control system was employed to control operating conditions of the downstream induction heating device 9 from phase fraction information measured by the phase transformation rate meter 10. However, at the time of exiting the soaking zone 7, most material remained in single α-phase, and therefore production proceeded with almost constant output of the induction heating device 9 and variation in mechanical properties did not improve.

Example 1 is a result of producing products from the material described above using the continuous annealing line according to the present disclosure illustrated in FIG. 1. The sheet passing speed and the steel sheet temperature at the exit from the heating zone 6 were controlled within the same ranges as in Comparative Example 1. However, for Example 1, the phase fraction immediately after annealing was measured by the phase transformation rate meter 10 at the exit from the induction heating device 9, and the output of the induction heating device 9 at the exit from the soaking zone 7 and the furnace temperature of the soaking zone 7 were controlled. This control based on the phase fraction stabilized the mechanical properties of the product and prevented material test outliers from occurring over the entire length.

Example 2, similarly to Example 1, is a result of producing products from the material described above using the continuous annealing line according to the present disclosure illustrated in FIG. 1. However, the position of the phase transformation rate meter 10 was changed to the exit from the cooling zone 8. The distance was large between the phase transformation rate meter 10 serving as a sensor and the induction heating device 9 serving as an actuator used with priority, and therefore a delay in response occurred compared to Example 1. Portions occurred where output change of the induction heating device 9 could not keep up, and therefore although a certain improvement in the material test failure rate was observed, the material test failure rate was slightly inferior to that of Example 1. However, compared to Example 1, Example 2 has the advantage of simplifying the restrictions on the position of the phase transformation rate meter 10 and simplifying heat treatment.

Example 3, similarly to Example 1, is a result of producing products from the material described above using the continuous annealing line according to the present disclosure illustrated in FIG. 1. However, the IH heating rate was 5 °C/s to 10 °C/s. Further, of the coils prepared, only those having a thickness of 2 mm were used. Due to the slow heating rate of IH, the length of IH apparatus had to be increased to reach the target temperature, resulting in longer hold time around the target arrival temperature. Further, transformation progressed more rapidly than expected at points where conditions changed, such as when heating took longer and the material (target grade) changed, resulting in overshooting. Accordingly, although greatly improved compared to Comparative Example 1, the material test failure rate was slightly inferior to that of Example 1.

Example 4, similarly to Example 1, is a result of producing products from the material described above using the continuous annealing line according to the present disclosure illustrated in FIG. 1. However, operation was carried out increasing the IH heating rate to 200 °C/s to 250 °C/s. Further, of the coils prepared, only those having a thickness of 2 mm were used. Thick coils were used, and therefore transport failure due to deformation did not occur even though the IH heating rate was fast, but overshoot occurred during temperature control due to the fast heating rate. Accordingly, although greatly improved compared to Comparative Example 1, the material test failure rate was slightly inferior to that of Example 1.

For Example 5, operating conditions were adjusted by manual control by an operator instead of using automatic feedback control at the line as in Example 1. A delay in response occurred compared to automatic control, and therefore the material test failure rate was inferior to that of Example 1, but a large improvement was seen compared to Comparative Example 1.

As described above, the continuous annealing line, continuous annealing method, method of producing a cold-rolled steel sheet and method of producing a coated or plated steel sheet can respond quickly to variation in material properties and substantially reduce variation in mechanical properties of products due to the configuration described above. Further, the continuous annealing line can be expected to reduce line length compared to a conventional line, and therefore reduce installation costs of production apparatus.

Although embodiments of the present disclosure have been described based on the drawings and examples, it should be noted that a person skilled in the art may make variations and modifications based on the present disclosure. Therefore, it should be noted that such variations and modifications are included within the scope of the present disclosure. For example, functions and the like included in each component and step may be rearranged, and a plurality of components and steps may be combined into one or divided, as long as no logical inconsistency results. An embodiment according to the present disclosure may be realized as a program executed by a processor provided to a device or as a storage medium on which the program is stored. The scope of the present disclosure should be understood to include these examples.

According to an embodiment described above, the zinc pot 11 was described as a galvanizing tank in which a thin steel sheet is dipped, but another coating or plating treatment may be carried out. The coating or plating treatment may be, for example, electrogalvanization treatment, hot-dip galvanizing treatment, or galvannealing treatment.

Further, for example, the processor of the process computer may read and execute a program stored in the storage (for example, memory) of the process computer to execute processing such as predicting the mechanical properties of the final product from the material property prediction model, constructing a transformation rate control model, and controlling the output of the induction heating device 9 so that a phase fraction is kept within a target range. Further, the material property prediction model and the transformation rate control model may be stored in the storage of the process computer.

### REFERENCE SIGNS LIST

- 1: payoff reel
- 2: welder
- 3: electrolytic cleaning device
- 4: entry-side looper
- 5: preheating zone
- 6: heating zone
- 7: soaking zone
- 8: cooling zone
- 8A: first cooling zone
- 8B: second cooling zone
- 9: induction heating device
- 10: phase transformation rate meter
- 11: zinc pot

## Claims

1. A continuous annealing line for a steel sheet, comprising a heating zone, a soaking zone, and a cooling zone, in this order, and further comprising:
at least one induction heating device disposed between the soaking zone and the cooling zone; and
a measuring device disposed at or after an exit from the induction heating device and configured to measure at least one phase fraction of the steel sheet.

2. The continuous annealing line according to claim 1, further comprising a control device configured to determine an operating condition of the induction heating device based on a measurement result of the measuring device.

3. The continuous annealing line according to claim 1 or 2, wherein a heating rate of the induction heater is 10 °C/s or more and is 200 °C/s or less.

4. A continuous annealing method for a steel sheet that is conveyed through a heating zone, a soaking zone, and a cooling zone, in this order, the method comprising:
after holding the temperature of the steel sheet in a recrystallization temperature range in the soaking zone,
a step of rapidly heating the steel sheet by at least one induction heating device disposed between the soaking zone and the cooling zone; and
a step of controlling an operating condition of the induction heating device based on a phase fraction of the steel sheet obtained between an exit from the soaking zone and entry to the cooling zone.

5. The continuous annealing method according to claim 4, wherein the induction heater heats the steel sheet at a rate of 10 °C/s or more and 200 °C/s or less.

6. A method of producing a cold-rolled steel sheet, the method comprising a step of annealing the steel sheet that is a cold-rolled steel sheet at an annealing temperature adjusted by the continuous annealing method according to claim 4 or 5.

7. A method of producing a coated or plated steel sheet, the method comprising a step of applying a coating or plating treatment to a surface of the steel sheet annealed by the method of producing a cold-rolled steel sheet according to claim 6.

8. The method of producing a coated or plated steel sheet according to claim 7, wherein the coating or plating treatment is electrogalvanization treatment, hot-dip galvanizing treatment, or galvannealing treatment.
